# EUROPÄISCHE PATENTSCHRIFT

(11) **EP 1 993 853 B1**
(45) Veröffentlichungstag und Bekanntmachung des Hinweises auf die Patenterteilung: **08.12.2010**
(21) Anmeldenummer: 07722933.4
(22) Anmeldetag: 26.02.2007
(51) Int. Cl.: B60B 3/16, B60B 3/04

(54) **FAHRZEUGRAD**
VEHICLE WHEEL
ROUE DE VEHICULE

(30) Priorität: 03.03.2006 DE 102006009884; 11.04.2006 DE 102006016953
(43) Veröffentlichungstag der Anmeldung: 26.11.2008
(73) Patentinhaber: Volkswagen Aktiengesellschaft, 38436 Wolfsburg (DE)
(72) Erfinder: MÜNTE, Markus, 30827 Garbsen (DE); RASENACK, Wolfgang, 10967 Berlin (DE)
(86) Internationale Anmeldenummer: PCT/EP2007/001621
(87) Internationale Veröffentlichungsnummer: WO 2007/101574

(56) Entgegenhaltungen:
- EP-A2- 1 010 546
- WO-A-96/24497
- DE-A1- 2 635 983
- DE-A1- 19 836 239
- FR-A1- 2 539 079
- US-B1- 6 517 165

## Beschreibung

Die Erfindung bezieht sich auf ein Fahrzeugrad umfassend eine Radscheibe mit einer Mittenöffnung sowie um die Mittenöffnung angeordnete Anlageflächen, über die das Fahrzeugrad gegen eine Gegenfläche verspannbar ist.

Fahrzeugräder der eingangs genannten Art sind aus dem Stand der Technik in einer Vielzahl unterschiedlicher Ausgestaltungsformen bekannt. Beispiele hierfür finden sich unter anderem in EP 0 807 025 B1, DE 198 36 239 C2, DE 101 22 202 C1, DE 102 18 339 A1, US 200310160502 und der gattungsbildenden WO 06/24497 A1.

Derartige Fahrzeugräder stützen sich in ihrem fertig montierten Zustand mit den Anlageflächen an einer Radnabe, einer Bremstrommel oder einer Bremsscheibe ab, die im folgenden verallgemeinert auch als "Radflansch" bezeichnet werden. Dazu sind im Bereich eines Lochkreises von Befestigungsöffnungen in der Regel eine radial weiter innenliegende und eine radial weiter außenliegende ringförmige Anlagefläche vorgesehen. Bei allen bekannten Fahrzeugrädern dieser Bauart sind die Anlageflächen derart ausgebildet, dass im unverspannten Zustand die radial innenliegende Anlagefläche gegenüber der radial außenliegenden Anlagefläche etwas zurücktritt. Durch diesen Versatz, der üblicherweise in der Größenordnung von 0,1 bis 0,2 mm liegt, wird bei der Montage zunächst eine definierte Anlage über die radial außenliegende Anlagefläche erzielt. Die radial innenliegende Anlagefläche gelangt hingegen erst beim Spannen der Radschrauben bzw. der Radmuttern in Anlage gegen den Radflansch, wobei der entsprechende Abschnitt der Radscheibe etwas einfedert. Im montierten Zustand liegt folglich im Bereich der radial außenliegenden Anlagefläche eine stärkere Verspannung vor, wodurch die im Betrieb auftretenden Seitenkräfte im Wesentlichen über die radial außenliegende Anlagefläche übertragen werden.

Davon ausgehend liegt der Erfindung die Aufgabe zugrunde, ein Fahrzeugrad zu schaffen, das einen verbesserten Festsitz der Radschrauben ermöglicht.

Diese Aufgabe wird durch ein Fahrzeugrad nach den Patentansprüchen 1, 13 und 20 gelöst.

Das erfindungsgemäße Fahrzeugrad umfasst insbesondere eine Radscheibe mit einer Mittenöffnung sowie um die Mittenöffnung angeordneten Anlageflächen, über die das Fahrzeugrad gegen eine Gegenfläche verspannbar ist, und zeichnet sich dadurch aus, dass auf mindestens einem Kreis um den Mittelpunkt der Mittenöffnung erste und zweite Anlageflächen vorgesehen sind, von denen die ersten Anlageflächen axial weiter vorstehen als die zweiten Anlageflächen. Es können jedoch auch von den konzentrisch um die Mittenöffnung angeordneten Anlageflächen die radial am weitesten innenliegende Anlagefläche axial am weitesten vorstehen.

Es hat sich gezeigt, dass sich mit diesen überraschend einfachen Maßnahmen, die eine Abkehr von der im Stand der Technik vorherrschenden Konfiguration bedeuten, ein deutlich verbessertes Festsitzverhalten des Rads erzielt wird, da hierdurch die Flächenpressung gleichmäßiger über die Radscheibe verteilt werden kann.

Insbesondere liegt die resultierende Kraft unter Seitenkrafteinfluss auf einem kleineren Durchmesser zur Radachse, als beim Stand der Technik. Gleichwohl bleibt das Fahrzeugrad gut montierbar.

Bei der Montage des Rades gelangen entgegen der Standardbauweise nunmehr zunächst die axial weiter vorstehenden ersten Anlageflächen bzw. die radial innenliegende Anlagefläche in Kontakt mit dem Radflansch. Diese liegen im Vergleich zum Stand der Technik stets radial weiter innen. Durch ein Anziehen der Radschrauben bzw. der Radmuttern legen sich nach einer entsprechenden elastischen Verformung der Radscheibe auch die zweiten Anlageflächen bzw. radial außenliegende Anlageflächen an den Radflansch an, so dass im fertigmontierten Zustand das Fahrzeugrad über alle Anlageflächen gegen den Radflansch verspannt ist.

Die Übertragung der Seitenkräfte über das Rad in die Bremsscheibe bzw. Bremstrommel sowie in die Radnabe erfolgt nunmehr hauptsächlich über den radial innenliegenden Bereich. Dieser Kraftfluss hat ein deutlich besseres Radfestsitzverhalten zur Folge.

Im Vergleich zu herkömmlichen Stahlstrukturrädern lässt sich durch das verbesserte Festsitzverhalten das Fahrzeugrad aus dünneren Blechen herstellen, woraus ein Gewicht- und Kostenvorteil resultiert.

Weitere vorteilhafte Ausgestaltungen sind in den Patentansprüchen angegeben.

Die radial außen- und innenliegenden Anlageflächen sind im Hinblick auf die Befestigung des Fahrzeugrads mittels Radschrauben oder Muttern vorzugsweise so angeordnet, dass der entsprechende Lochkreis der Befestigungsöffnungen zwischen der innenliegenden Anlagefläche und der außenliegenden Anlagefläche verläuft.

Um zu vermeiden, dass sich das Rad während der Montage am Fahrzeug durch das Anziehen der Radschrauben bzw. -muttern asymmetrisch verschiebt oder die Radnabe durch eine einseitige Querkraft belastet wird, ist gemäß einer vorteilhaften Ausgestaltung der Erfindung vorgesehen, dass sich Abschnitte der radial innenliegenden Anlagefläche über den Durchmesser des Lochkreises der Befestigungsöffnungen nach außen hinaus erstrecken.

Insbesondere kann die innenliegende Anlagefläche die Befestigungsöffnungen jeweils in einem Winkelbereich von mehr als 180° umschließen. Hierdurch werden eine gleichmäßige Abstützung erzielt und Rundlaufabweichungen vermieden.

In diesem Zusammenhang ist es weiterhin vorteilhaft, Flächenabschnitte der außenliegende Anlagefläche in Radialrichtung jeweils außenseitig der Befestigungsöffnungen anzuordnen.

Zudem ist es möglich, die außenliegende Anlagefläche in mehrere, untereinander unverbundene Teilflächen aufzuteilen. In einer bevorzugten Ausgestaltung erstrecken sich die Teilflächen der außenliegenden Anlagefläche sich jeweils bogensegmentartig um eine Befestigungsöffnung.

Gemäß einer weiteren, auf vorteilhaften Ausgestaltung der Erfindung ist die innenliegende Anlagefläche derart ausgebildet, dass deren Radialausdehnung zwischen den Befestigungsöffnungen unter den Lochkreisdurchmesser absinkt. Die innenliegende Anlagefläche kann dabei als durchgehende Ringfläche ausgebildet sein. Es ist allerdings auch möglich, diese wie die außenliegende Anlagefläche aus mehreren, untereinander unverbundenen Teilflächen zu bilden.

Reicht die innenliegende Anlagefläche unmittelbar an die außenliegende Anlagefläche heran, so wird im Stoßbereich zwischen diesen vorzugsweise jeweils eine Nut ausgebildet. Dies gewährleistet eine planparallele Ausführung der Anlageflächen und damit eine gleichmäßige Anlage an den Radflansch.

Gemäß einer weiteren vorteilhaften Ausgestaltung weist die Radscheibe mehrere, auf einem Lochkreis angeordnete Befestigungsöffnungen auf, so dass sich die Spannkraft gleichmäßig über die Radscheibe verteilen lässt.

Bei der Ausführungsform mit auf einem Kreis um den Mittelpunkt der Mittenöffnung angeordneten ersten und zweiten Anlageflächen ist vorzugsweise vorgesehen, dass der Lochkreis zwischen zwei Kreisen liegt, die jeweils erste und zweite Anlageflächen schneiden, wobei die ersten Anlageflächen axial weiter vorstehen als die zweiten Anlageflächen. Hierdurch wird bei der Montage eine stabile Abstützung des Fahrzeugrads gewährleistet und gleichzeitig ein weitestgehend querkraftfreies Verspannen ermöglicht.

Alternativ oder ergänzend kann auch vorgesehen werden, dass der Lochkreis erste, axial weiter vorstehenden Anlageflächen und zweite, zurückgesetzte Anlageflächen schneidet. Auch hierdurch wird vermieden, dass sich das Rad während der Montage am Fahrzeug durch das Anziehen der Radschrauben bzw. -muttern asymmetrisch verschiebt oder die Radnabe durch eine einseitige Querkraft belastet wird.

Die ersten und zweiten Anlageflächen können als voneinander getrennte Flächenbereiche an der Radscheibe angeordnet werden. Weiterhin ist es möglich, dass eine erste Anlagefläche und eine zweite Anlagefläche aneinander angrenzen, wobei zwischen beiden eine Stufe ausgebildet ist.

Zur Vermeidung von Spannungsspitzen kann im Stoßbereich zwischen einer ersten Anlagefläche und einer zweiten Anlagefläche zusätzlich eine Nut ausgebildet werden. Dies gewährleistet eine planparallele Lage der Anlageflächen und damit eine gleichmäßige Anlage am Radflansch.

Weiterhin ist es möglich, eine erste Anlagefläche und eine zweite Anlagefläche in eine schräge Fläche zu integrieren, so dass beide stufenlos ineinander übergehen.

Gemäß einer weiteren Ausgestaltungsform sind eine erste Anlagefläche und eine zweite Anlagefläche durch eine Befestigungsöffnung voneinander getrennt.

Dabei können die Anlageflächen oder Teilflächen derselben konzentrisch um die jeweils nächstliegende Befestigungsöffnung herum angeordnet werden.

Ferner ist es möglich, die Anlageflächen oder Teilflächen derselben konzentrisch um den Mittelpunkt der Mittenöffnung herum anzuordnen.

Die erfindungsgemäße Konfiguration eignet sich insbesondere für Stahlräder, die aufgrund des verbesserten Festsitzverhaltens mit dünnerer Wanddicke hergestellt werden können.

Vorzugsweise wird zumindest die Radscheibe aus Stahlblech gefertigt.

Nachfolgend wird die Erfindung anhand von in der Zeichnung dargestellten Ausführungsbeispielen näher erläutert. Die Zeichnung zeigt in:
- Figur 1: eine Teilansicht auf die Innenseite einer Radscheibe eines Fahrzeugrads nach einem ersten Ausführungsbeispiel,
- Figur 2: eine Schnittansicht im Bereich einer Befestigungsöffnung der Radscheibe aus Figur 1,
- Figur 3: eine Teilansicht auf die Innenseite einer Radscheibe nach einem zweiten Ausführungsbeispiel,
- Figur 4: einen Schnitt entlang der Linie A-A in Figur 3 in vergrößerter Darstellung,
- Figur 5: eine Teilansicht auf die Innenseite einer Radscheibe nach einem dritten Ausführungsbeispiel,
- Figur 6: einen Schnitt entlang der Linie B-B in Figur 5 in vergrößerter Darstellung,
- Figur 7: eine Teilansicht auf die Innenseite einer Radscheibe nach einem vierten Ausführungsbeispiel,
- Figur 8: einen Schnitt entlang der Linie C-C in Figur 8 in vergrößerter Darstellung,
- Figur 9: eine erste Abwandlung des vierten Ausführungsbeispiels,
- Figur 10: eine zweite Abwandlung des vierten Ausführungsbeispiels,
- Figur 11: eine dritte Abwandlung des vierten Ausführungsbeispiels,
- Figur 12: eine Teilansicht auf die Innenseite einer Radscheibe nach einem fünften Ausführungsbeispiel, und in
- Figur 13: eine Teilansicht auf die Innenseite einer Radscheibe nach einem sechsten Ausführungsbeispiel.
- Figur 14: eine Teilansicht auf die Innenseite einer Radscheibe eines Fahrzeugrads nach einem sechsten Ausführungsbeispiel,
- Figur 15: eine Schnittansicht im Bereich einer Befestigungsöffnung der Radscheibe aus Figur 14 entlang der Linie D-D in vergrößerter Darstellung,
- Figur 16: eine Teilansicht auf die Innenseite einer Radscheibe nach einem siebten Ausführungsbeispiel,
- Figur 17: einen Schnitt entlang der Linie E-E in Figur 16 in vergrößerter Darstellung,
- Figur 18: eine Teilansicht auf die Innenseite einer Radscheibe nach einem achten Ausführungsbeispiel,
- Figur 19: einen Schnitt entlang der Linie F-F in Figur 18 in vergrößerter Darstellung,
- Figur 20: eine Teilansicht auf die Innenseite einer Radscheibe nach einem neunten Ausführungsbeispiel,
- Figur 21: eine Teilansicht auf die Innenseite einer Radscheibe nach einem zehnten Ausführungsbeispiel,
- Figur 22: eine Teilansicht auf die Innenseite einer Radscheibe nach einem elften Ausführungsbeispiel,
- Figur 23: eine Teilansicht auf die Innenseite einer Radscheibe nach einem zwölften Ausführungsbeispiel,
- Figur 24: eine Teilansicht auf die Innenseite einer Radscheibe nach einem dreizehnten Ausführungsbeispiel, und in
- Figur 25: eine Teilansicht auf die Innenseite einer Radscheibe nach einem vierzehnten Ausführungsbeispiel.

Das erste Ausführungsbeispiel zeigt ein Fahrzeugrad, dessen Radscheibe 1 aus Stahlblech hergestellt ist.

An der Radscheibe 1 sind mehrere Befestigungsöffnungen 2 vorgesehen, über die das Fahrzeugrad am Fahrzeug montiert wird. Die Befestigungsöffnungen 2 sind dabei gleichbeabstandet auf einem Lochkreis angeordnet, dessen Radius r dem Abstand der Mitten der Befestigungsöffnungen 2 von der Mitte M der Radscheibe 1 entspricht.

Im Bereich der Befestigungsöffnungen 2 ist jeweils ein kreisförmiges Versenk 3 ausgebildet, das an seiner vom Fahrzeuge wegweisenden Außenseite eine vorstehende Kalotte 4 für eine Radschraube ausbildet. Das Versenk 3 weist bei dem dargestellten Ausführungsbeispiel im Wesentlichen die gleiche Wanddicke wie die restliche Radscheibe 1 auf. Es ist jedoch auch möglich, durch eine Materialstauchung zumindest im Bereich des Versenks 3 eine erhöhte Wanddicke vorzusehen.

Weiterhin weist die Radscheibe 1 eine Mittenöffnung 5 auf, über die das Rad auf einer Nabe, einem Bremsscheibentopf oder einer Bremstrommel aufsitzt. Der Rand 6 der Mittenöffnung 5 ist zur Außenseite der Radscheibe 1 hin umgebogen. Die Kante 7 des umgebogenen Rands 6 liegt dabei etwas über dem Niveau der Außenkanten der Kalotten 4.

An der Radscheibe 1 können weiterhin mehrere Belüftungsöffnungen 8a vorgesehen sein, die jeweils durch Speichen bzw. Speichenanordnungen 8b voneinander getrennt sind. Die Anzahl der Speichenanordnungen 8b entspricht der Anzahl der Befestigungsöffnungen 2, wobei letztere jeweils im Wurzelbereich der Speichenanordnungen 8b angeordnet sind. Dies ist für den Kraftfluss im Fahrzeugrad besonders vorteilhaft. Jedoch kann auch ein anderes Radscheibendesign zum Einsatz kommen, das sich von dem Ausführungsbeispiel im Hinblick auf die Belüftungsöffnungen 8a und die Speichenanordnungen 8b unterscheidet.

In jedem Fall weist jedoch die Radscheibe 1 an ihrer Innenseite mehrere Anlageflächen auf, über die sich das Fahrzeugrad im montierten Zustand an einer planen Gegenfläche einer Radnabe, eines Bremsscheibentopf oder einer Bremstrommel abstützt. Diese Anlageflächen sind konzentrisch um die Mittenöffnung 5 herum angeordnet.

Im Unterschied zu der bei Fahrzeugrädern gebräuchlichen Bauweise steht von den Anlageflächen die radial am weitesten innenliegende Anlagefläche 9 axial am weitesten vor, so dass diese bei der Montage des Fahrzeugrads am Fahrzeug als erstes in Anlage mit der planen Gegenfläche gelangt.

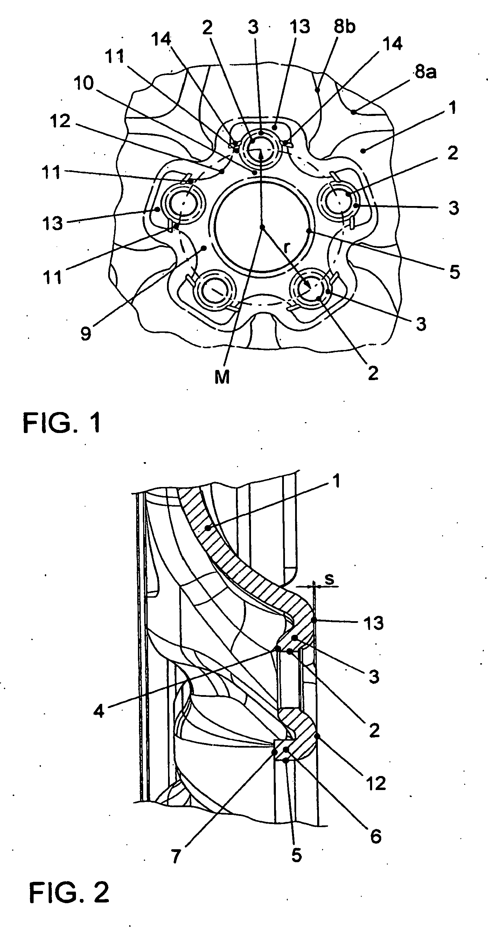

Wie Figur 1 zeigt, liegt diese radial innenliegende Anlagefläche 9 weitestgehend innerhalb des Lochkreises der Befestigungsöffnungen 2.

Vorzugsweise wird die radial innenliegende Anlagefläche 9 als plane Fläche ausgeführt.

Bei dem dargestellten Ausführungsbeispiel umfasst die radial innenliegende Anlagefläche 9 einen ringförmigen Flächenabschnitt 10, der bezogen auf die Radmitte M radial innerhalb der Befestigungsöffnungen 2 verläuft. Dieser ringförmige Flächenabschnitt 10 kann bis unmittelbar an die Mittenöffnung 5 heranreichen.

Wie Figur 1 weiter zeigt, grenzt die radial innenliegende Anlagefläche 9 unmittelbar an die Versenke 3 der Befestigungsöffnungen 2 an, so dass diese radial innenseitig bogensegmentförmig von der Anlagefläche 9 umschlossen werden.

Im Bereich der Befestigungsöffnungen 2 weist die innenliegende Anlagefläche 9 zudem Flächenabschnitte 11 auf, die sich in Radialrichtung über den Lochkreis der Befestigungsöffnungen 2 hinauserstrecken. Durch diese Flächenabschnitte 11 wird beim Spannen der Radschrauben ein Verrutschen in der Haupterstreckungsebene der Radscheibe 2 vermieden, da ein Verkippen des Rads verhindert wird. Dies ermöglicht eine weitestgehend querkraftfreie Montage des Fahrzeugrads.

Insbesondere bei einer vollflächigen Ausbildung der innenliegenden Anlagefläche 9 kann im Bereich der Befestigungsöffnungen 2 jeweils ein Umschließungswinkel größer als 180° erzielt werden.

Zwischen den Befestigungsöffnungen 2 sinkt die radial innenliegende Anlagefläche 9 unter den Lochkreisdurchmesser ab. Bei dem dargestellten Ausführungsbeispiel sind die Außenkanten 12 der Anlageflächen 9 zwischen den Flächenabschnitten 11 zur Radmitte M hin weich einwärts gekrümmt.

Es ist jedoch auch möglich, die innenliegende Anlagefläche 9 in mehrere, untereinander unverbundene Teilflächen aufzuteilen. So können beispielsweise die außerhalb des Lochkreisdurchmessers befindlichen Flächenabschnitte 11 von weiter innenliegenden Abschnitten getrennt sein. Überdies ist eine Segmentierung der innenliegenden Anlagefläche 9 in Umfangsrichtung denkbar.

Die Radscheibe weist weiterhin eine außerhalb des Lochkreisdurchmessers vorgesehene, außenliegende Anlagefläche 13 auf. Diese außenliegende Anlagefläche 13 ist gegenüber der innenliegenden Anlagefläche 9 zurückgesetzt, so dass diese bei der Montage erst im Verlauf des Verspannens und nach einer elastischen Verformung der Radscheibe 1 im Bereich der innenliegenden Anlagefläche 9 in Anlage gegen die plane Gegenfläche gelangt. In Figur 2 ist dieser Versatz, der in der Größenordnung von etwa 0,1 bis 0,8 mm, bevorzugt bei etwa 0.5 mm liegt, durch das Spaltmaß s angedeutet.

Vorzugsweise wird auch die radial außenliegende Anlagefläche 13 als plane Fläche ausgeführt.

Bei dem ersten Ausführungsbeispiel ist die außenliegende Anlagefläche 13 in mehrere, untereinander unverbundene Teilflächen aufgeteilt. Wie Figur 1 zeigt, sind sämtliche Teilflächen der Anlagefläche 13 gleichartig ausgebildet. Sie verlaufen jeweils radial außenseitig und in etwa bogensegmentartig um die jeweilige Befestigungsöffnung 2. Zudem können-die Teilflächen jeweils bis an das zugehörige Versenk 3 heranreichen.

Weiterhin ist im Stoßbereich zwischen der innenliegenden Anlagefläche 9 und der außenliegenden Anlagefläche 13 jeweils eine Nut 14 ausgebildet. Hierdurch werden die Anlageflächen 9 und 13 untereinander entkoppelt. Dies erlaubt zum einen eine planparallele Ausführung der Anlageflächen und vermeidet Bauteilsspannungen bei der Montage, da eine gleichmäßige Anlage an die Gegenfläche erzielt wird.

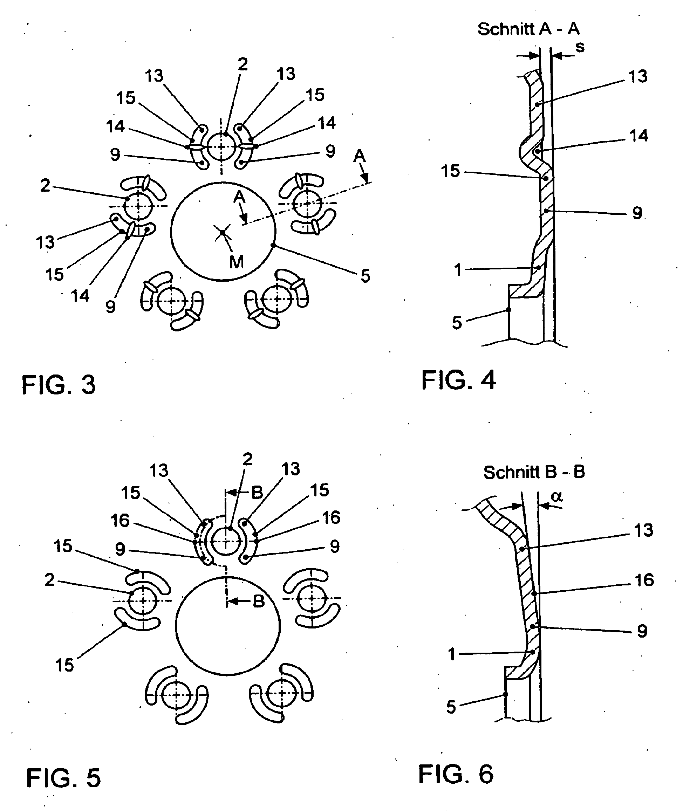

Ein zweites Ausführungsbeispiel ist in den Figuren 3 und 4 dargestellt. Die innen- und außenliegenden Anlageflächen 9 und 13 sind jeweils paarweise als Bogensegmente 15 ausgeführt, von denen jeweils zwei um eine Befestigungsöffnung 2 herum angeordnet sind. Dieser Bogensegmente 15 können beispielsweise jeweils konzentrisch zu den zugehörigen Befestigungsöffnungen ausgebildet sein. Wie insbesondere Figur 4 entnommen werden kann besteht zwischen den beiden Anlageflächen 9 und 13 eines jeden Bogensegments 15 ein axialer Versatz s, so dass die radial weiter innenliegenden Abschnitte der Bogensegmente 15 bei der Montage als erstes in Anlage an eine plane Gegenfläche gelangen. Die Anlageflächen 9 und 13 eines Bogensegments 15 sind durch eine vorzugsweise geprägte Nut 14 entkoppelt. Diese Nuten sind vorzugsweise radial etwas außerhalb des Lochkreisdurchmessers angeordnet.

Anstelle eines stufenförmigen Versatzes, wir in dem ersten und zweiten Ausführungsbeispiel dargestellt ist, können die axial unterschiedlich weit vorstehenden Anlageflächen 9 und 13 in eine Schrägefläche 16 integriert werden, wie dies beispielhaft anhand des dritten Ausführungsbeispiels in den Figuren 5 und 6 dargestellt ist. Bei dem dargestellten Ausführungsbeispiel besitzen die Anlageflächen wiederum die Form von Bogensegmente 15, von denen jeweils zwei um eine Befestigungsöffnung 2 herum angeordnet sind. Im Unterschied zu den zweiten Ausführungsbeispiel fallen die Anlageflächen jedoch in Radialrichtung um einen Anstellwinkel α zu einer planen Gegenfläche ab. Dabei steht der radial am weitesten innenliegende Bereich als innenliegende Anlagefläche 9 axial weiter vor, als der radial am weitesten außenliegende Bereich 13. Auch in diesem Fall kommt somit bei der Montage zunächst ein radial innerhalb des Lochkreisdurchmessers befindlicher Bereich der Radscheibe in Anlage gegen eine plane Gegenfläche, der sich elastisch verformt, bevor außerhalb des Lochkreisdurchmessers befindliche Bereiche der Radscheibe gegen die Gegenfläche verspannt werden.

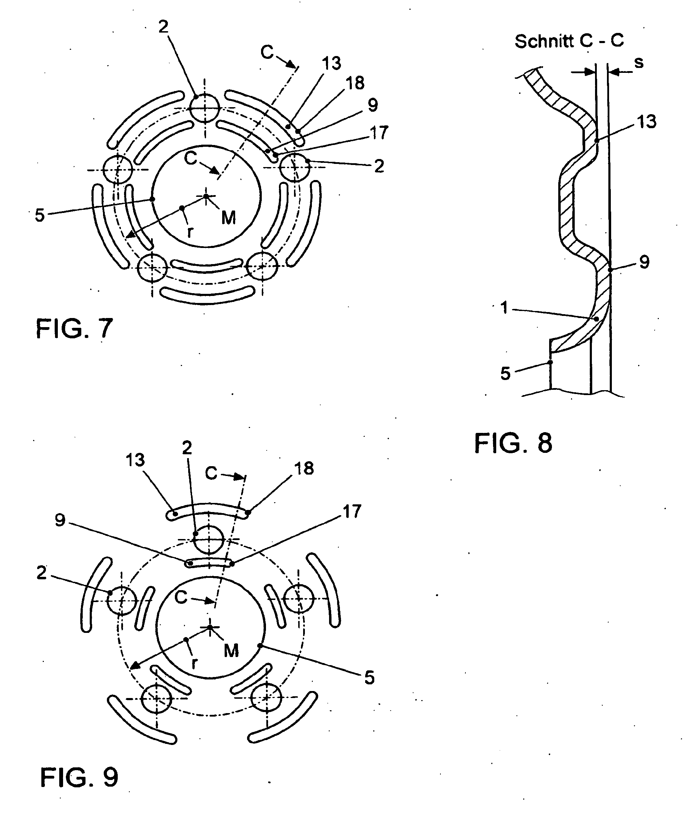

Die Figuren 7 und 8 zeigen ein viertes Ausführungsbeispiel für eine erfindungsgemäße Radscheibe 1. Die Anlageflächen 9 und 13 sind in diesem Fall als zu der Mitte M der Radscheibe 1 konzentrische Kreisbogensegmente 17 und 18 ausgebildet. Die axial um den Versatz s weiter vorstehende, radial innenliegende Anlagefläche 9 und das zugehörige Kreisbogensegment 17 liegen innerhalb des Lochkreisdurchmessers, wohingegen die radial weiter außenliegende Anlagefläche 13 beziehungsweise das zugehörige Kreisbogensegment 18 außerhalb des Lochkreisdurchmessers liegen. Die Anlageflächen 9 und 13 sind jeweils durch die Befestigungsöffnungen 2 unterbrochen, so dass die Kreisbogensegmente 17 und 18 jeweils von einer Befestigungsöffnung 2 zur nächsten Befestigungsöffnung 2 verlaufen.

Die Anordnung der Kreisbogensegmente 17 und 18 kann wie in den Figuren 9 bis 11 dargestellt, modifiziert werden. So ist es beispielsweise möglich, dass die Kreisbogensegemente 17 und 18 in Radialrichtung jeweils eine Befestigungsöffnung 2 einschließen, wie dies in Figur 9 gezeigt ist. Die dort gezeigten Kreisbogensegemente 17 und 18 können alternativ auch untereinander verbunden werden.

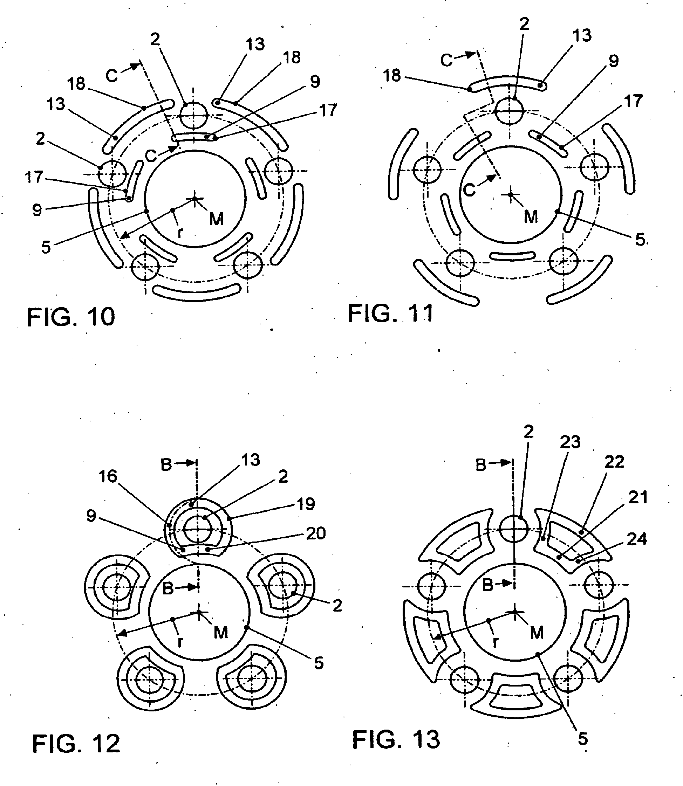

Weiterhin ist es möglich, einen Teil der Kreisbogensegmente 17 bzw. 18 in Umfangsrichtung zwischen den Befestigungsöffnungen 2 und einen anderen Teil der Kreisbogensegmente 18 bzw. 17 radial innerhalb oder außerhalb der Befestigungsöffnungen 2 anzuordnen, wie dies in den Figuren 10 und 11 dargestellt ist. In sämtlichen Fällen bleibt der in Figur 8 dargestellte Versatz s zwischen der radial innenliegenden Anlageflächen 9 und der radial außenliegenden Anlagefläche 13 gewährleistet.

Ein fünftes Ausführungsbeispiel ist in Figur 12 dargestellt. Bei diesem Ausführungsbeispiel umschließen die Anlageflächen jeweils vollständig eine Befestigungsöffnung 2. Dabei kann ein Teilabschnitt 19 auf den Mittelpunkt der Befestigungsöffnung 2 und ein weiterer Teilabschnitt 20 auf den Mittelpunkt M der Radscheibe 1 beziehungsweise der Mittenöffnung 5 derselben zentriert sein. Bei dem in Figur 12 gezeigten Ausführungsbeispiel umschließt der außenliegende Teilabschnitt 19 die Befestigungsöffnung in einem Winkelbereich von etwa 230° bis 300° ein. Prinzipiell ist es möglich, auch hier einen stufenförmigen Versatz s zwischen einem radial weiter innenliegenden Anlagebereich 9 und einem radial weiter außenliegenden Anlagebereich 13 vorzusehen und beide Anlagebereiche gegebenenfalls durch eine Nut zu trennen. Es ist jedoch auch möglich, wie in dem Ausführungsbeispiel dargestellt, entlang der Schnittlinie B-B eine nach außen abfallende Schrägfläche analog Figur 6 vorzusehen.

Bei dem in Figur 13 dargestellten sechsten Ausführungsbeispiel sind wiederum eine radial weiter innenliegende Anlagefläche 9 und eine radial weiter außenliegende Anlagefläche 13 zu einer Schrägfläche 16 miteinander verbunden. Letzterer umfasst zwei zu dem Mittelpunkt M der Radscheibe 1 konzentrischer Teilabschnitte 21 und 22, die in Umfangsrichtung zwischen benachbarten Befestigungsöffnungen 2 verlaufen. Diese Teilabschnitte 21 und 22 sind an ihren Enden durch Bogensegmente 23 und 24 verbunden, die bogenförmig um die jeweils nächstliegende Befestigungsöffnung 2 verlaufen.

Die vorstehend beschriebenen Fahrzeugräder ermöglichen aufgrund der axial weiter vorstehenden inneren Anlagefläche einen verbesserten Kraftfluss bei der Übertragung von Seitenkräften und ermöglichen dadurch ein besseres Radfestsitzverhalten bzw. einen verbesserten Festsitz der Radschrauben. Hierdurch lassen sich Stahlstrukturräder zumindest im Bereich der Radscheibe mit geringeren Blechdicken realisieren, woraus ein Gewichts- und Kostenvorteil resultiert.

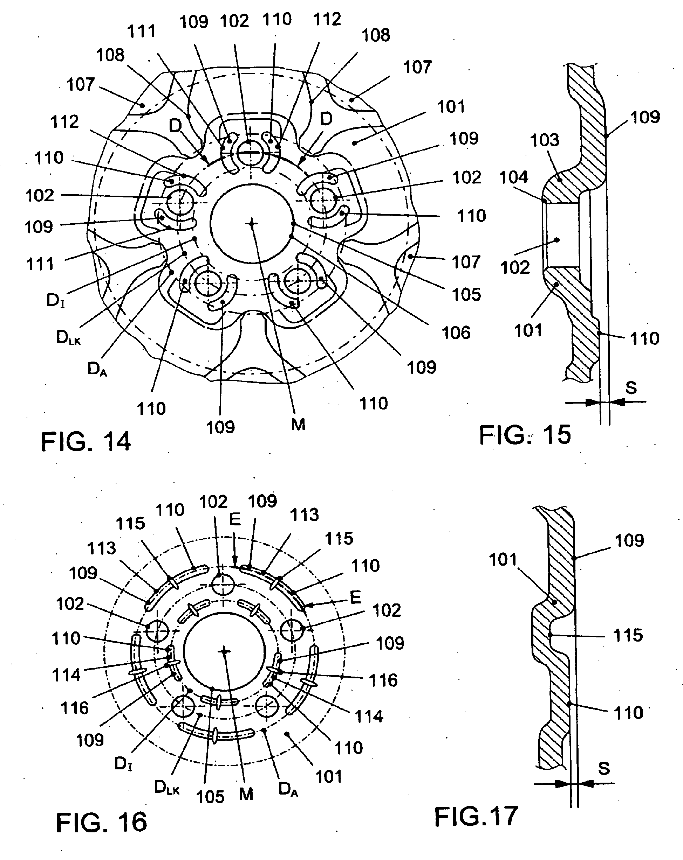

Das sechste Ausführungsbeispiel in den Figuren 14 und 15 zeigt ein Fahrzeugrad, dessen Radscheibe 101 aus Stahlblech hergestellt ist. An der Radscheibe 101 sind mehrere Befestigungsöffnungen 102 vorgesehen, über die das Fahrzeugrad am Fahrzeug montiert wird. Die Befestigungsöffnungen 102 sind dabei in Umfangsrichtung gleichbeabstandet auf einem Lochkreis mit dem Durchmesser D_{LK} angeordnet.

Im Bereich der Befestigungsöffnungen 102 ist jeweils ein kreisförmiges Versenk 103 ausgebildet, das an seiner vom Fahrzeuge wegweisenden Außenseite eine vorstehende Kalotte 104 für eine Radschraube ausbildet. Das Versenk 103 weist bei dem dargestellten Ausführungsbeispiel im Wesentlichen die gleiche Wanddicke wie die restliche Radscheibe 101 auf. Es ist jedoch auch möglich, durch eine Materialstauchung zumindest im Bereich des Versenks 103 eine erhöhte Wanddicke vorzusehen.

Weiterhin weist die Radscheibe 101 eine Mittenöffnung 105 auf, über die das Rad auf einer Nabe, einem Bremsscheibentopf oder einer Bremstrommel zentriert wird. Der Randbereich 106 der Mittenöffnung 105 kann zur Außenseite der Radscheibe 101 hin umgebogen sein, wobei die Endkante des umgebogenen Rands etwa auf oder etwas über dem Niveau der Außenkanten der Kalotten 104 liegt.

An der Radscheibe 101 können weiterhin mehrere Belüftungsöffnungen 107 vorgesehen sein, die jeweils durch Speichen bzw. Speichenanordnungen 108 voneinander getrennt sind. Die Anzahl der Speichenanordnungen 108 entspricht der Anzahl der Befestigungsöffnungen 102, wobei letztere jeweils im Wurzelbereich der Speichenanordnungen 108 angeordnet sind. Dies ist für den Kraftfluss im Fahrzeugrad besonders vorteilhaft. Jedoch kann auch ein anderes Radscheibendesign zum Einsatz kommen, das sich von dem Ausführungsbeispiel im Hinblick auf die Belüftungsöffnungen 107 und die Speichenanordnungen 108 unterscheidet.

In jedem Fall weist jedoch die Radscheibe 101 an ihrer Innenseite mehrere Anlageflächen auf, über die sich das Fahrzeugrad im montierten Zustand an einer planen Gegenfläche z.B. einer Radnabe, eines Bremsscheibentopf oder einer Bremstrommel abstützt.

Erfindungsgemäß wird zwischen ersten Anlageflächen 109 und zweiten Anlageflächen 110 unterschieden, wobei die ersten Anlageflächen 109 axial weiter vorstehen als die zweiten Anlageflächen 110, wie dies in Figur 15 durch das Maß s angedeutet ist. Dies hat zur Folge, dass bei der Montage des Fahrzeugrads die Abstützung zunächst allein durch die ersten Anlageflächen 109 erfolgt. Beim Spannen der Radschrauben bzw. Radmuttern werden dann die zweiten Anlageflächen 110 gegen die entsprechende Gegenfläche gezogen, so dass im fertigmontierten Zustand das Fahrzeugrad sowohl über die ersten Anlageflächen 109 als auch über die zweiten Anlageflächen 110 verspannt ist. Da die ersten Anlageflächen 109 zunächst weiter vorstehen, ergibt sich an diesen im verspannten Zustand eine höhere Spannkraft als an den zweiten Anlageflächen 110.

Da die ersten Anlageflächen 109 sowohl Flächenabschnitte innerhalb des Lochkreisdurchmessers D_{LK} als auch außerhalb des Lochkreisdurchmessers D_{LK} aufweisen, wird die Spannkraft gleichmäßig um die Befestigungsöffnungen 102 auf Bereiche innerhalb und außerhalb des Lochkreisdurchmessers D_{LK} verteilt. Im Vergleich zu herkömmlichen Fahrzeugrädern, bei denen eine radial außenliegende Anlagefläche gegenüber einer radial weiter innenliegenden Anlagefläche weiter vorsteht, ergibt sich ein resultierender Kraftangriff, der in Bezug auf die Radachse auf einem kleineren Durchmesser liegt, als beim Stand der Technik.

Bei dem sechsten Ausführungsbeispiel nach Figur 14 ist entsprechend vorgesehen, dass der Lochkreis D_{LK} zwischen zwei zur Radmitte M konzentrischen Kreisen D_{A} und D_{I} liegt, die jeweils die ersten und zweiten Anlageflächen 109 bzw. 110 schneiden. Die ersten und zweiten Anlageflächen 109 und 110 sind hier jeweils als Bogensegmente 111 bzw. 112 um die jeweils nächstliegende Befestigungsöffnung 102 ausgeführt. Die einzelnen Segmente können insbesondere konzentrisch um die jeweils zugehörige Befestigungsöffnung 102 verlaufen. Durch die Ausgestaltung der ersten und zweiten Anlageflächen 109 und 110 in Form von Bogensegmenten 111 bzw. 112 schneidet der Lochkreis D_{LK} sowohl die ersten Anlageflächen 109 wie auch die zweiten Anlageflächen 110, die jeweils durch die zugehörige, in Umfangsrichtung dazwischenliegende Befestigungsöffnung 102 voneinander getrennt werden.

Wie bereits oben angedeutet, kann die Radscheibe aus Stahlblech hergestellt werden. Dabei können die Anlageflächen 109 und 110 umformtechnisch ausgeprägt werden, so dass eine spannende Nachbearbeitung nicht erforderlich ist. Der in Figur 15 dargestellte axiale Versatz s liegt in der Größenordnung von 0,1 bis 0,8 mm.

Von dem in den Figuren 14 und 15 dargestellten Ausführungsbeispiel sind wiederum zahlreiche Abwandlungen möglich. Im Folgenden sollen lediglich einige Abwandlungen beispielhaft anhand der weiteren Figuren 16 bis 25 erläutert werden, wobei gleichartige Elemente jeweils mit den gleichen Bezugszeichen versehen sind und sich die Erläuterungen auf die Unterschiede beschränken.

Bei dem in den Figuren 16 und 17 dargestellten siebten Ausführungsbeispiel sind die ersten und zweiten Anlageflächen 109 und 110 an Bogensegmenten 113 und 114 ausgebildet, die um die Radmitte M verlaufen. In Figur 16 sind mehrere, in Umfangsrichtung gleichbeabstandete äußere Bogensegmente 113 zu erkennen, die auf einem Kreis D_{A} außerhalb des Lochkreisdurchmessers D_{LK} liegen und vorzugsweise konzentrisch zur Radmitte M verlaufen. Ein Schnitt in Umfangsrichtung durch ein solches Bogensegment 113 ist in Figur 17 dargestellt. Jedes Bogensegment 113 weist eine axial weiter vorstehende, erste Anlagefläche 109 sowie eine zurückgesetzte, zweite Anlagefläche 110 auf. Die beiden Anlageflächen 109 und 110 sind durch eine Nut 115 voneinander getrennt, die gewährleistet, dass sich die Anlageflächen 109 und 110 beim Verspannen gut anlegen und Zwängungen im Übergangsbereich zwischen den stufenförmig abgesetzten, ansonsten im wesentlichen parallelen Anlageflächen 109 und 110 vermieden werden.

Die radial weiter innenliegenden Bogensegmente 114 sind auf einem Kreis D_{I} innerhalb des Lochkreisdurchmessers D_{LK} angeordnet und den äußeren Bogensegmenten 113 nachgebildet, so dass auch die radial innenliegenden Bogensegmente 114 jeweils durch eine Nut 116 getrennte erste und zweite Anlageflächen 109 und 110 aufweisen.

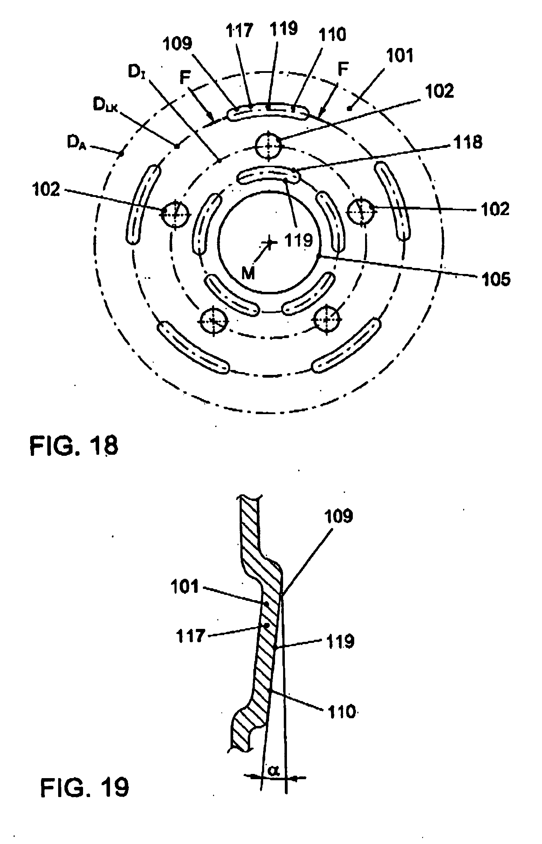

Die Figuren 18 und 19 zeigen ein achtes Ausführungsbeispiel, das sich von dem siebten Ausführungsbeispiel nach den Figuren 16 und 17 primär durch die Ausgestaltung der ersten und zweiten Anlageflächen 109 und 110 entlang entsprechender Bogensegmente 117 und 118 um die Radmitte M unterscheidet. Diese Bogensegmente 117 und 118 liegen wiederum auf Kreisen D_{A} und D_{I} außerhalb und innerhalb des Lochkreisdurchmessers D_{LK}.

Wie Figur 19 entnommen werden kann, sind bei diesem Ausführungsbeispiel die erste und zweite Anlagefläche 109 und 110 an dem äußeren Bogensegment 117 wie auch an dem radial weiter innenliegenden Bogensegment 118 durch eine im wesentlichen in Umfangsrichtung verlaufende Schrägfläche 119 gebildet, die gegenüber der Haupterstreckungsebene der Radscheibe 101 um einen Winkel α geneigt ist. Die erste und zweite Anlagefläche 109 und 110 gehen so gewissermaßen stufenlos ineinander über. Im fertigmontierten Zustand liegen dann die Bogensegmente 117 und 118 jeweils vollflächig an einer entsprechenden Gegenfläche an.

Weiterhin unterscheidet sich das achte Ausführungsbeispiel von dem siebten Ausführungsbeispiel dadurch, dass die Bogensegmente 117 und 118 sich jeweils in voneinander beabstandeten Kreissektoren befinden, die jeweils eine Befestigungsöffnung 102 enthalten, während bei dem siebten Ausführungsbeispiel die Bogensegmente 113 und 114 in Kreissektoren angeordnet sind, welche jeweils zwischen Befestigungsöffnungen 102 enthaltenden Kreissektoren liegen. Jedoch kann die Ausdehnung der Bogensegmente 113 und 114 bzw. 117 und 118 Umfangsrichtung verhältnismäßig frei gestaltet werden.

Die vorstehend erläuterten Prinzipien in Bezug auf die Bereitstellung axial weiter vorstehender erster Anlageflächen 109 und zurücktretender zweiter Anlageflächen 110 kann mit unterschiedlichen Formgebungen für die Anlageflächen kombiniert werden.

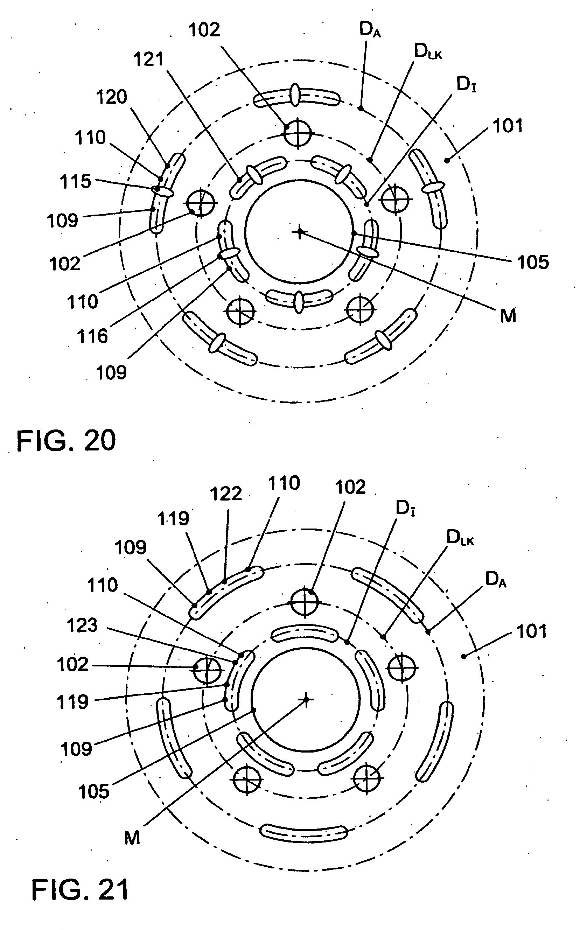

So zeigen die Figuren 20 und 21 beispielhaft weitere Anordnungsmuster für konzentrisch um die Radmitte M angeordnete Bogensegmente 120 bis 123, die jeweils auf Kreisen D_{A} und D_{I} außerhalb und innerhalb des Lochkreisdurchmessers D_{LK} angeordnet sind. Während die äußeren Bogensegmente 120 in Figur 20 in Radialrichtung betrachtet neben der jeweiligen Befestigungsöffnung 102 liegen, verlaufen die radial weiter innenliegenden Bogensegmente 121 jeweils zwischen zwei benachbarten Befestigungsöffnungen 102. In Figur 21 ist die Anordnung der äußeren und inneren Bogensegmente 122 und 123 umgekehrt. Die einzelnen Bogensegmente können dabei wie in den Figuren 17 und 19 dargestellt ausgeführt werden. Hierbei ist es prinzipiell möglich, für einzelne Bogensegmente an einer Radscheibe 101 einen Verlauf entsprechend Figur 17 und andere Bogensegmente an der gleichen Radscheibe 101 einen Verlauf entsprechend Figur 19 vorzusehen. Beispielhaft sind in den dargestellten Ausführungsbeispielen in Figur 20 jeweils durch eine Nut 115 bzw. 116 getrennte erste und zweite Anlageflächen 109 und 110 gezeigt, wohingegen in Figur 21 an sämtlichen Bogensegmenten 122 und 123 erste und zweite Anlageflächen 109 und 110 über Schrägflächen 119 realisiert werden.

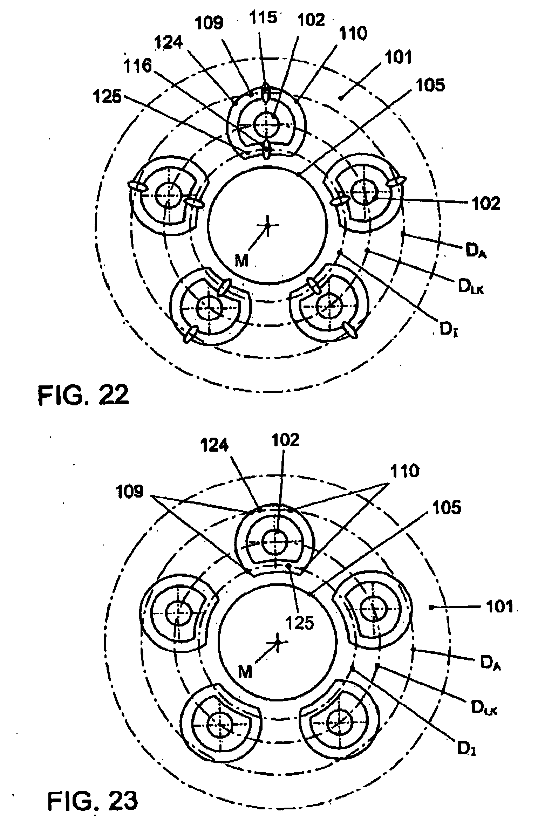

Die Figuren 22 und 23 zeigen die Möglichkeit, jeweils geschlossene Anlageflächen um die einzelnen Befestigungsöffnungen 102 anzuordnen. Dabei kann ein Teilabschnitt 124 auf den Mittelpunkt der Befestigungsöffnung 102 und ein weiterer Teilabschnitt 125 auf den Mittelpunkt M der Radscheibe 101 zentriert sein. Bei dem in Figur 22 gezeigten Ausführungsbeispiel umschließt der außenliegende Teilabschnitt 124 die Befestigungsöffnung 102 in einem Winkelbereich von etwa 230° bis 300° ein. Auch hier ist es möglich, einen stufenförmigen Versatz s zwischen einer ersten Anlagefläche 109 und einer zweiten Anlagefläche 110 vorzusehen und beide Anlageflächen 109 und 110 gegebenenfalls durch Nuten 115 und 116 zu trennen. Vorzugsweise werden die Nuten auf einer Linie angeordnet, die durch die Radmitte M sowie die Mitte der zugehörigen Befestigungsöffnung 102 verläuft. Jedoch können auch an einer geschlossenen Anlagefläche durch eine Schrägstellung in Umfangsrichtung erste und zweite Anlageflächen 109 und 110 analog Figur 13 realisiert werden, wie dies in Figur 23 angedeutet ist. In diesem Fall ist vorgesehen dass auf Kreisen D_{A} und D_{I} außerhalb und innerhalb des Lochkreisdurchmessers D_{LK} die geschlossene Anlagefläche jeweils axial weiter vorstehende erste Anlageflächen 109 und axial zurückgesetzte zweite Anlageflächen 110 ausbildet.

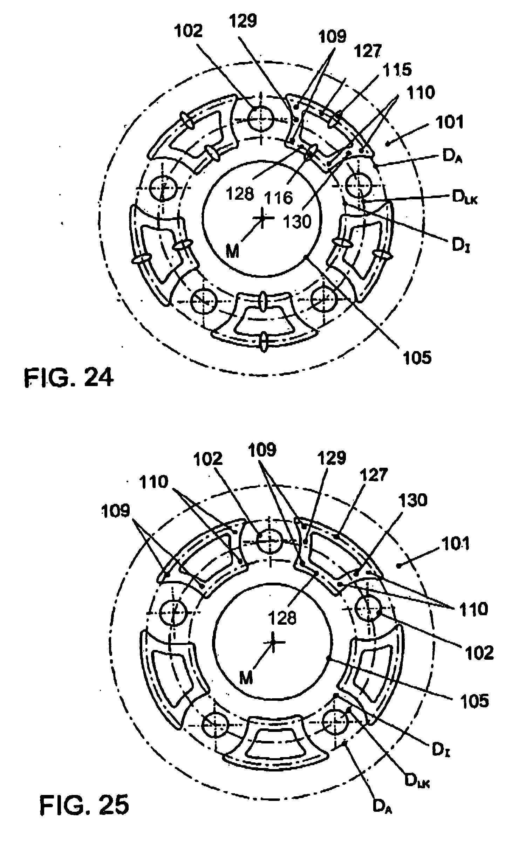

Ferner können, wie in den-Figuren 24 und 25 dargestellt, geschlossene Anlageflächen in Umfangsrichtung zwischen den Befestigungsöffnungen 102 vorgesehen werden. Diese umfassen beispielsweise zwei zu dem Mittelpunkt M der Radscheibe 101 konzentrische Teilabschnitte 127 und 128, die an ihren Enden durch Bogensegmente 129 und 130 verbunden sind, welche bogenförmig um die jeweils nächstliegende Befestigungsöffnung 102 verlaufen. Auch hier kann entsprechend den Figuren 23 und 24 an den geschlossenen Anlageflächen sowohl in Bereichen außerhalb und innerhalb des Lochkreisdurchmessers D_{LK} jeweils eine axial weiter vorstehende erste Anlagefläche 109 und eine axial zurückgesetzte zweite Anlagefläche 110 gemäß den Figuren 17 und 19 realisiert werden.

Die vorstehend beschriebenen Fahrzeugräder ermöglichen aufgrund der axial weiter vorstehenden ersten Anlagefläche einen verbesserten Kraftfluss bei der Übertragung von Seitenkräften und ermöglichen dadurch ein besseres Radfestsitzverhalten bzw. einen verbesserten Festsitz der Radschrauben. Hierdurch lassen sich Stahlstrukturräder zumindest im Bereich der Radscheibe mit geringeren Blechdicken realisieren, woraus ein Gewichts- und Kostenvorteil resultiert.

Zudem bleibt ein gutes Montageverhalten gewährleistet, da sich die erste Anlagefläche über den Lochkreisdurchmesser hinaus erstrecken kann und damit beim Ansetzen des Rades eine breite Abstützbasis gegen ein Verkippen bietet.

Die Erfindung wurde vorstehend anhand bevorzugter Ausführungsbeispiele näher erläutert. Sie ist jedoch nicht auf diese Ausführungsbeispiele beschränkt, sondern umfasst alle durch die Patentansprüche definierten Ausgestaltungen.

## Patentansprüche

1. Fahrzeugrad, umfassend eine Radscheibe (1) mit einer Mittenöffnung (5) und um die Mittenöffnung (5) angeordneten Anlageflächen (9, 13), über die das Fahrzeugrad gegen eine Gegenfläche verspannbar ist, **dadurch gekennzeichnet, dass** von den konzentrisch um die Mittenöffnung angeordneten Anlageflächen (9, 13) die radial am weitesten innenliegende Anlagefläche (9) axial am weitesten vorsteht, wobei der radial am weitesten innenliegende Bereich der Anlageflächen axial weiter vorsteht, als der radial am weitesten außenliegende Bereich, so dass bei einem Verspannen gegen die genannte Gegenfläche der radial am weitesten Innenliegende Bereich in Anlage gegen die Gegenfläche gelangt, bevor der radial am weitesten außenliegende Bereich in Anlage gegen die genannte Gegenfläche gelangt.

2. Fahrzeugrad nach Anspruch 1, **dadurch gekennzeichnet, dass** zwischen der innenliegenden Anlagefläche (9) und einer außenliegenden Anlagefläche (13) ein Lochkreis mit mehreren Befestigungsöffnungen (2) vorgesehen ist.

3. Fahrzeugrad nach Anspruch 2, **dadurch gekennzeichnet, dass** sich Abschnitte (11) der innenliegenden Anlagefläche (9) über den Durchmesser des Lochkreises der Befestigungsöffnungen (2) hinaus erstrecken.

4. Fahrzeugrad nach einem der Ansprüche 1 bis 3, **dadurch gekennzeichnet, dass** die außenliegende Anlagefläche (13) Flächenabschnitte beinhaltet, die in Radialrichtung jeweils außenseitig der Befestigungsöffnungen (2) angeordnet sind.

5. Fahrzeugrad nach einem der Ansprüche 1 bis 4, **dadurch gekennzeichnet, dass** die außenliegende Anlagefläche (13) durch untereinander unverbundene Teilflächen gebildet wird.

6. Fahrzeugrad nach Anspruch 5, **dadurch gekennzeichnet, dass** die Teilflächen der außenliegenden Anlagefläche (13) sich jeweils bogensegmentartig um eine Befestigungsöffnung (2) erstrecken.

7. Fahrzeugrad nach einem der Ansprüche 1 bis 6, **dadurch gekennzeichnet, dass** die innenliegende Anlagefläche (9) die Befestigungsöffnungen (2) jeweils in einem Winkelbereich größer als 180° umschließt.

8. Fahrzeugrad nach einem der Ansprüche 1 bis 7, **dadurch gekennzeichnet, dass** die Radialausdehnung der innenliegenden Anlagefläche (9) zwischen den Befestigungsöffnungen (2) unter den Lochkreisdurchmesser absinkt

9. Fahrzeugrad nach einem der Ansprüche 1 bis 8, **dadurch gekennzeichnet, dass** die innenliegende Anlagefläche (9) durch mehrere, untereinander unverbundene Teilflächen gebildet wird.

10. Fahrzeugrad nach einem der Ansprüche 1 bis 9, **dadurch gekennzeichnet, dass** im Stoßbereich zwischen der innenliegenden Anlagefläche (9) und der außenliegenden Anlagefläche (13) jeweils eine Nut (14) ausgebildet ist.

11. Fahrzeugrad nach einem der Ansprüche 1 bis 10, **dadurch gekennzeichnet, dass** die innenliegende Anlagefläche (9) und die außenliegende Anlagefläche (13) einen axialen Versatz (s) aufweisen.

12. Fahrzeugrad nach einem der Ansprüche 1 bis 9, **dadurch gekennzeichnet, dass** die innenliegende Anlagefläche (9) und die außenliegende Anlagefläche (13) ineinander übergehen und eine Schrägfläche (16) bilden.

13. Fahrzeugrad, umfassend eine Radscheibe mit einer Mittenöffnung (105) und um die Mittenöffnung (105) angeordneten Anlageflächen (109, 110), über die das Fahrzeugrad gegen eine Gegenfläche verspannbar ist, **dadurch gekennzeichnet, dass** auf mindestens einem Kreis um den Mittelpunkt der Mittenöffnung (105) mehrere um diesen Mittelpunkt verlaufende Bogensegemente (113, 114; 117, 118; 121, 122, 123; 125; 128, 129) angeordnet sind,
wobei an jedem Bogensegment (113, 114; 117, 118) jeweils erste und zweite Anlageflächen (109, 110) vorgesehen sind, von denen die ersten Anlageflächen (109) axial weiter vorstehen als die zweiten Anlageflächen (110).

14. Fahrzeugrad nach Anspruch 13, **dadurch gekennzeichnet, dass** die Radscheibe (101) mehrere, auf einem Lochkreis (D_{LK}) angeordnete Befestigungsöffnungen (102) aufweist.

15. Fahrzeugrad nach Anspruch 14, **dadurch gekennzeichnet, dass** der Lochkreis (D_{LK}) zwischen zwei Kreisen (D_{A}, D_{I}) liegt, die jeweils erste und zweite Anlageflächen (109, 110) schneiden.

16. Fahrzeugrad nach einem der Ansprüche 13 bis 15, **dadurch gekennzeichnet, dass** eine erste Anlagefläche (109) und eine zweite Anlagefläche (110) aneinander angrenzen und zwischeneinander eine Stufe ausbilden.

17. Fahrzeugrad nach einem der Ansprüche 13 bis 16, **dadurch gekennzeichnet, dass** im Stoßbereich zwischen einer ersten Anlagefläche (109) und einer zweiten Anlagefläche (110) eine Nut (115, 116) ausgebildet ist.

18. Fahrzeugrad nach einem der Ansprüche 13 bis 15, **dadurch gekennzeichnet, dass** eine erste Anlagefläche (109) und eine zweite Anlagefläche (110) an einer schrägen Fläche (119) ausgebildet sind und ineinander übergehen:

19. Fahrzeugrad nach einem der Ansprüche 13 bis 18, **dadurch gekennzeichnet, dass** die Anlageflächen (109, 110) konzentrisch um den Mittelpunkt der Mittenöffnung (105) herum angeordnet sind.

20. Fahrzeugrad, umfassend eine Radscheibe (101) mit einer Mittenöffnung (105), mehreren, auf einem Lochkreis (D_{LK}) um die Mittenöffnung (105) angeordneten Befestigungsöffnungen (102), und um die Mittenöffnung (105) angeordneten Anlageflächen (109, 110), über die das Fahrzeugrad gegen eine Gegenfläche verspannbar ist, **dadurch gekennzeichnet, dass**
eine erste Anlagefläche (109) und eine zweite Anlagefläche (110) jeweils in Form eines um den Mittelpunkt einer Befestigungsöffnung (102) verlaufenden Bogensegments (111, 112) ausgebildet und in Umfangsrichtung durch die dazwischenliegende Befestigungsöffnung (102) voneinander getrennt sind, so dass der Lochkreis (D_{LK}) die erste Anlagefläche (109) und die zweite Anlagefläche (110) schneidet, wobei die erste Anlagefläche (109) axial weiter vorsteht als die zweite Anlagefläche (110).

21. Fahrzeugrad nach Anspruch 20, **dadurch gekennzeichnet, dass** der Lochkreis (D_{LK}) zwischen zwei Kreisen (D_{A}, D_{I}) liegt, die jeweils die erste und die zweite Anlagefläche (109, 110) schneiden,.

22. Fahrzeugrad nach einem der Ansprüche 1 bis 21, **dadurch gekennzeichnet, dass** das Fahrzeugrad ein Stahlrad ist.

23. Fahrzeugrad nach einem der Ansprüche 1 bis 22, **dadurch gekennzeichnet, dass** die Radscheibe aus Stahlblech gefertigt ist.

## Claims

1. Vehicle wheel, comprising a wheel disc (1) with a central aperture (5) and abutment faces (9, 13) arranged around the central aperture (5), via which abutment faces (9, 13) the vehicle wheel can be secured against an opposite surface, **characterised in that**, of the abutment faces (9, 13) arranged concentrically around the central aperture, the abutment face (9) located radially furthest inwardly projects furthest axially, while the region located radially furthest inwardly of the abutment faces projects further axially than the region located radially furthest outwardly, so that, upon being secured against the aforementioned opposite surface, the region located radially furthest inwardly comes into abutment against the opposite surface before the region located radially furthest outwardly comes into abutment against the aforementioned opposite surface.

2. Vehicle wheel according to Claim 1, **characterised in that** a pitch circle with a plurality of fastening openings (2) is provided between the inwardly located abutment face (9) and an outwardly located abutment face (13).

3. Vehicle wheel according to Claim 2, **characterised in that** portions (11) of the inwardly located abutment face (9) extend beyond the diameter of the pitch circle of the fastening openings (2).

4. Vehicle wheel according to any one of Claims 1 to 3, **characterised in that** the outwardly located abutment face (13) includes surface portions which are each arranged outside the fastening openings (2) in the radial direction.

5. Vehicle wheel according to any one of Claims 1 to 4, **characterised in that** the outwardly located abutment face (13) is formed by mutually unconnected partial faces.

6. Vehicle wheel according to Claim 5, **characterised in that** the partial faces of the outwardly located abutment face (13) each extend as arcuate segments around a respective fastening opening (2).

7. Vehicle wheel according to any one of Claims 1 to 6, **characterised in that** the inwardly located abutment face (9) extends around the fastening openings (2) over an angular range greater than 180° in each case.

8. Vehicle wheel according to any one of Claims 1 to 7, **characterised in that** the radial extent of the inwardly located abutment face (9) falls below the pitch circle diameter between the fastening openings (2).

9. Vehicle wheel according to any one of Claims 1 to 8, **characterised in that** the inwardly located abutment face (9) is formed by a plurality of mutually unconnected partial faces.

10. Vehicle wheel according to any one of Claims 1 to 9, **characterised in that** a groove (14) is formed in each case in the joint region between the
inwardly located abutment face (9) and the outwardly located abutment face (13).

11. Vehicle wheel according to any one of Claims 1 to 10, **characterised in that** the inwardly located abutment face (9) and the outwardly located abutment face (13) have an axial offset (s).

12. Vehicle wheel according to any one of Claims 1 to 9, **characterised in that** the inwardly located abutment face (9) and the outwardly located abutment face (13) merge into one another and form an oblique face (16).

13. Vehicle wheel, comprising a wheel disc with a central aperture (105) and abutment faces (109, 110) arranged around the central aperture (105), via which abutment faces (109, 110) the vehicle wheel can be secured against an opposite surface, **characterised in that** a plurality of arcuate segments (113, 114; 117, 118; 121, 122, 123; 125; 128, 129) are arranged on at least one circle around the centre of the central aperture (105) and are disposed around said centre,
respective first and second abutment faces (109, 110), of which the first abutment faces (109) project axially further than the second abutment faces (110), being provided on each arcuate segment (113, 114; 117, 118).

14. Vehicle wheel according to Claim 13, **characterised in that** the wheel disc (101) has a plurality of fastening openings (102) arranged on a pitch circle (D_{LK}).

15. Vehicle wheel according to Claim 14, **characterised in that** the pitch circle (D_{LK}) lies between two circles (D_{A}, D_{I}) which each intersect first and second abutment faces (109, 110).

16. Vehicle wheel according to any one of Claims 13 to 15, **characterised in that** a first abutment face (109) and a second abutment face (110) border one another and form a step between them.

17. Vehicle wheel according to any one of Claims 13 to 16, **characterised in that** a groove (115, 116) is formed in the joint region between a first abutment face (109) and a second abutment face (110).

18. Vehicle wheel according to any one of Claims 13 to 15, **characterised in that** a first abutment face (109) and a second abutment face (110) are formed on an oblique face (119) and merge into one another.

19. Vehicle wheel according to any one of Claims 13 to 18, **characterised in that** the abutment faces (109, 110) are arranged concentrically around the centre of the central aperture (105).

20. Vehicle wheel, comprising a wheel disc (101) with a central aperture (105), a plurality of fastening openings (102) arranged on a pitch circle (D_{LK}) around the central aperture (105) and abutment faces (109, 110) arranged around the central aperture (105), via which abutment faces (109, 110) the vehicle wheel can be secured against an opposite surface, **characterised in that** a first abutment face (109) and a second abutment face (110) are each configured in the form of an arcuate segment (111, 112) disposed around the centre of a respective fastening opening (102) and are separated from one another in the circumferential direction by the fastening opening (102) located between them, so that the pitch circle (D_{LK}) intersects the first abutment face (109) and the second abutment face (110), the first abutment face (109) projecting further axially than the second abutment face (110).

21. Vehicle wheel according to Claim 20, **characterised in that** the pitch circle (D_{LK}) lies between two circles (D_{A}, D_{I}) which each intersect the first and second abutment faces (109, 110).

22. Vehicle wheel according to any one of Claims 1 to 21, **characterised in that** the vehicle wheel is a steel wheel.

23. Vehicle wheel according to any one of claims 1 to 22, **characterised in that** the wheel disc is made from steel sheet.

## Revendications

1. Roue de véhicule comprenant un disque de roue (1) avec une ouverture centrale (5) et des surfaces d'appui (9, 13) disposées autour de l'ouverture centrale (5), par le biais desquelles la roue de véhicule peut être serrée contre une surface conjuguée, **caractérisée en ce que** la surface d'appui (9) intérieure la plus distale radialement des surfaces d'appui (9, 13) disposées concentriquement autour de l'ouverture centrale dépasse axialement le plus loin, la région intérieure la plus distale radialement des surfaces d'appui dépassant radialement plus loin que la région extérieure la plus distale radialement, de sorte que dans le cas d'un serrage contre ladite surface conjuguée, la région intérieure la plus distale radialement parvienne en appui contre la surface conjuguée avant que la région extérieure la plus distale radialement parvienne en appui contre ladite surface conjuguée.

2. Roue de véhicule selon la revendication 1, **caractérisée en ce que** l'on prévoit entre la surface d'appui intérieure (9) et une surface d'appui extérieure (13) un cercle perforé avec plusieurs ouvertures de fixation (2).

3. Roue de véhicule selon la revendication 2, **caractérisée en ce que** des portions (11) de la surface d'appui intérieure (9) dépassent au-delà du diamètre du cercle perforé des ouvertures de fixation (2).

4. Roue de véhicule selon l'une quelconque des revendications 1 à 3, **caractérisée en ce que** la surface d'appui extérieure (13) contient des portions de surface qui sont disposées dans la direction radiale à chaque fois du côté extérieur des ouvertures de fixation (2).

5. Roue de véhicule selon l'une quelconque des revendications 1 à 4, **caractérisée en ce que** la surface d'appui extérieure (13) est formée par des surfaces partielles non connectées les unes aux autres.

6. Roue de véhicule selon la revendication 5, **caractérisée en ce que** les surfaces partielles de la surface d'appui extérieure (13) s'étendent à chaque fois en forme de segment d'arc autour d'une ouverture de fixation (2).

7. Roue de véhicule selon l'une quelconque des revendications 1 à 6, **caractérisée en ce que** la surface d'appui intérieure (9) entoure les ouvertures de fixation (2) à chaque fois dans une plage angulaire supérieure à 180°.

8. Roue de véhicule selon l'une quelconque des revendications 1 à 7, **caractérisée en ce que** l'étendue radiale de la surface d'appui intérieure (9) diminue entre les ouvertures de fixation (2) sous le diamètre du cercle perforé.

9. Roue de véhicule selon l'une quelconque des revendications 1 à 8, **caractérisée en ce que** la surface d'appui intérieure (9) est formée par plusieurs surfaces partielles non connectées les unes aux autres.

10. Roue de véhicule selon l'une quelconque des revendications 1 à 9, **caractérisée en ce que** dans la région d'impact entre la surface d'appui intérieure (9) et la surface d'appui extérieure (13) est à chaque fois réalisée une rainure (14).

11. Roue de véhicule selon l'une quelconque des revendications 1 à 10, **caractérisée en ce que** la surface d'appui intérieure (9) et la surface d'appui extérieure (13) présentent un décalage axial (s).

12. Roue de véhicule selon l'une quelconque des revendications 1 à 9, **caractérisée en ce que** la surface d'appui intérieure (9) et la surface d'appui extérieure (13) se prolongent l'une dans l'autre et forment une surface oblique (16).

13. Roue de véhicule comprenant un disque de roue avec une ouverture centrale (105) et des surfaces d'appui (109, 110) disposées autour de l'ouverture centrale (105), par le biais desquelles la roue de véhicule peut être serrée contre une surface conjuguée, **caractérisée en ce que** sur au moins un cercle autour du centre de l'ouverture centrale (105) sont disposés plusieurs segments d'arc (113, 114 ; 117, 118 ; 121, 122, 123 ; 125 ; 128, 129) s'étendant autour de ce centre,
sur chaque segment d'arc (113, 114 ; 117, 118) étant à chaque fois prévues des surfaces d'appui (109, 110), dont les premières surfaces d'appui (109) dépassent axialement plus que les deuxièmes surfaces d'appui (110).

14. Roue de véhicule selon la revendication 13, **caractérisée en ce que** le disque de roue (101) présente plusieurs ouvertures de fixation (102) disposées sur un cercle perforé (D_{LK}).

15. Roue de véhicule selon la revendication 14, **caractérisée en ce que** le cercle perforé (D_{LK}) se situe entre deux cercles (D_{A}, D_{I}), qui coupent à chaque fois les première et deuxième surfaces d'appui (109, 110).

16. Roue de véhicule selon l'une quelconque des revendications 13 à 15, **caractérisée en ce qu'**une première surface d'appui (109) et une deuxième surface d'appui (110) sont adjacentes l'une à l'autre et constituent entre elles un étage.

17. Roue de véhicule selon l'une quelconque des revendications 13 à 16, **caractérisée en ce que** dans la région d'impact entre une première surface d'appui (109) et une deuxième surface d'appui (110) est réalisée une rainure (115, 116).

18. Roue de véhicule selon les revendications 13 à 15, **caractérisée en ce qu'**une première surface d'appui (109) et une deuxième surface d'appui (110) sont réalisées sur une surface oblique (119) et se prolongent l'une dans l'autre.

19. Roue de véhicule selon l'une quelconque des revendications 13 à 18, **caractérisée en ce que** les surfaces d'appui (109, 110) sont disposées concentriquement autour du centre de l'ouverture centrale (105).

20. Roue de véhicule comprenant un disque de roue (101) avec une ouverture centrale (105), plusieurs ouvertures de fixation (102) disposées sur un cercle perforé (D_{LK}) autour de l'ouverture centrale (105), et des surfaces d'appui (109, 110) disposées autour de l'ouverture centrale (105), par le biais desquelles la roue de véhicule peut être serrée contre une surface conjuguée, **caractérisée en ce qu'**une première surface d'appui (109) et une deuxième surface d'appui (110) sont réalisées à chaque fois en forme de segment d'arc (111, 112) s'étendant autour du centre d'une ouverture de fixation (102) et sont espacées l'une de l'autre dans la direction périphérique par l'ouverture de fixation intermédiaire (102), de sorte que le cercle perforé (D_{LK}) coupe la première surface d'appui (109) et la deuxième surface d'appui (110), la première surface d'appui (109) dépassant axialement plus que la deuxième surface d'appui (110).

21. Roue de véhicule selon la revendication 20, **caractérisée en ce que** le cercle perforé (D_{LK}) se situe entre deux cercles (D_{A}, D_{I}) qui coupent à chaque fois la première et la deuxième surface d'appui (109, 110).

22. Roue de véhicule selon l'une quelconque des revendications 1 à 21, **caractérisée en ce que** la roue de véhicule est une roue en acier.

23. Roue de véhicule selon l'une quelconque des revendications 1 à 22, **caractérisée en ce que** le disque de roue est fabriqué en tôle d'acier.
